# EUROPEAN PATENT SPECIFICATION

(11) **EP 1 806 264 B1**
(45) Date of publication and mention of the grant of the patent: **29.06.2011**
(21) Application number: 06256627.8
(22) Date of filing: 29.12.2006
(51) Int. Cl.: B60S 1/04

(54) **Vehicle wiper device**
Scheibenwischvorrichtung für ein Fahrzeug
Dispositif d'essuie-glace de véhicule

(30) Priority: 06.01.2006 JP 2006001886
(43) Date of publication of application: 11.07.2007
(73) Proprietor: Mitsuba Corporation, Kiryu-shi, Gunma 376-8555 (JP); Honda Motor Co., Ltd., Minato-ku Tokyo 107-8556 (JP)
(72) Inventor: Suzuki, Takeo c/o Mitsuba Corporation, Kiryu-shi Gunma (JP); Hayakawa, Nobuhide c/o Honda R&D Co., Ltd., Saitama 351-0193 (JP)
(74) Representative: Wilson Gunn

(56) References cited:
- EP-A1- 0 484 175
- FR-A1- 2 871 126
- US-B1- 6 216 309
- US-B1- 6 510 580

## Description

### BACKGROUND OF THE INVENTION

The present invention relates to a vehicle wiper device for swingably driving wiper shafts, to which wiper arms are attached, by a motor and for wiping a window shield glass of a vehicle.

Vehicles such as automobiles and the like are provided with a wiper device in order to wipe adhesion matters such as rain drops, mist, snow, droplets splashed from the vehicle traveling ahead, and the like that have adhered to the window shield glass. This type of wiper device has the wiper arms, on tips of which wiper blades are mounted, and wiper shafts to which the wiper arms are attached. The wiper shafts are coupled with a wiper motor through a link mechanism and swingably driven by the wiper motor. With this arrangement, when the wiper motor is driven, the wiper blades swingably move on a glass surface and wipe it.

As a wiper device of a tandem type, an opposed wiping type, and the like having two wiper arms, there is known a so-called frame-integrated type (modular type) wiper device which includes a pair of wiper shafts corresponding to the respective wiper arms to rotatably support these wiper shafts by pivot holders, respectively, and to link the pivot holders and the wiper motor through a frame. For example, Patent Document 1 (Japanese Patent Laid-Open Publication No. 2000-135971) discloses the wiper device in which a frame unit is constituted by linking the pivot holder on a driver's seat side and the pivot holder on an assistant driver's seat side through a pipe-shaped frame and the frame unit is fixed to a vehicle body by attachment portions provided in the respective pivot holders.

In such a frame-integrated type wiper device, a bush (grommet) formed of an elastic member such as rubber and the like is mounted on the attachment portion of each pivot holder and the frame unit is fixed to the vehicle body by bolts and the like through the bushes. Therefore, when the wiper motor is driven, the frame unit is turned by a drive reaction force thereof in a rotation direction of being centered about an axial line passing through the attachment portions of the respective pivot holders, whereby there is a possibility that vibration and noise will be generated.

For this reason, in the wiper device shown in Patent Document 1, the wiper motor fixed to an approximately intermediate position of the frame is provided with a support pin, and the support pin is inserted into an insertion hole of the vehicle body, whereby a rotation-directional load is supported by the support pin and the turn of the frame unit is suppressed.

US 6216309 discloses a vehicle wiper device according to the preamble of claim 1 having a wiper shaft attaching a wiper arm and a wiper motor operative to swingably drive the wiper shaft. The device comprises two wiper frames having respective wiper shafts. The wiper frames are secured to a vehicle body by bracket portions. A wiper motor is provided on one wiper frame, which is connected to the other wiper frame by a drive shaft.

US 6510580 also discloses a vehicle wiper device comprising a pair of pivot shafts, a pair of pivot holders, a frame, a wiper motor and link mechanism. When the device is fixed to a vehicle body a supporting pin provided at the wiper motor is first inserted into and held by a hole of the vehicle body to decide a fixing position of the device and then a pair of fastening portions of the pivot holders are fixed to the vehicle body by bolts.

### SUMMARY OF THE INVENTION

However, in the wiper device disclosed in Patent Document 1, since the support pin projects in a direction vertical to a turn direction of the frame unit so as to support the load by a side surface thereof, the load due to the turn of the frame unit acts as a shear force with respect to the support pin, which results in deterioration of durability of the support pin.

An object of the present invention is to reduce vibration and noise caused during an operation of wipers by suppressing a turn of a vehicle wiper device to a vehicle body.

According to the present invention there is provided a vehicle wiper device according to claim 1 below. Optional features of the device are recited in claims 2 to 4.

In embodiments of the present invention, since a load applied to the motor bracket is supported by the support portion, even if the rotation-directional load is applied to the motor bracket due to a reaction force and the like of the wiper motor, the load can be supported by the support portion. Therefore, vibration and noise of the vehicle wiper device can be reduced by suppressing the turn of the motor bracket. Further, since the load applied to the motor bracket is surface-supported by the support surface abutted against the vehicle body, the load applied to the motor bracket can be supported as a compression load exerted on the support portion in place of a shear load, whereby durability of the support portion can be enhanced. Further, since the support projection projecting from the support surface is positioned by being inserted into the support hole of the vehicle body, the support portion can be positioned to the vehicle body without using a tightening member such as a bolt.

Where a bush formed of an elastic member is mounted on the support portion, vibration and the like generated between the vehicle body and the motor bracket is absorbed by the bush and therefore vibration and noise from the motor bracket can be reduced.

### BRIEF DESCRIPTION OF THE DRAWINGS

FIG. 1 is an explanatory view schematically showing a vehicle wiper device according to an embodiment of the present invention;
FIG. 2 is a perspective view showing the wiper device shown in FIG. 1 in detail;
FIG. 3 is a side view showing a wiper motor shown in FIG. 2 in detail;
FIG. 4 is a front view showing an internal structure of a decelerator shown in FIG. 3;
FIG. 5 is a perspective view showing a motor bracket shown in FIG. 2 in detail;
FIG. 6 is a side view showing a state of attaching the wiper motor to the motor bracket;
FIG. 7 is a sectional view showing an attachment portion of the motor bracket shown in FIG. 5 to a vehicle body;
FIG. 8 is a sectional view showing an engaging portion of a support portion and the vehicle body shown in FIG. 7 in detail; and
FIG. 9 is an explanatory view showing a relation between a turn direction of the motor bracket and the support portion.

### DESCRIPTION OF THE PREFERRED EMBODIMENTS

An embodiment of the present invention will be described below in detail with reference to the drawings.

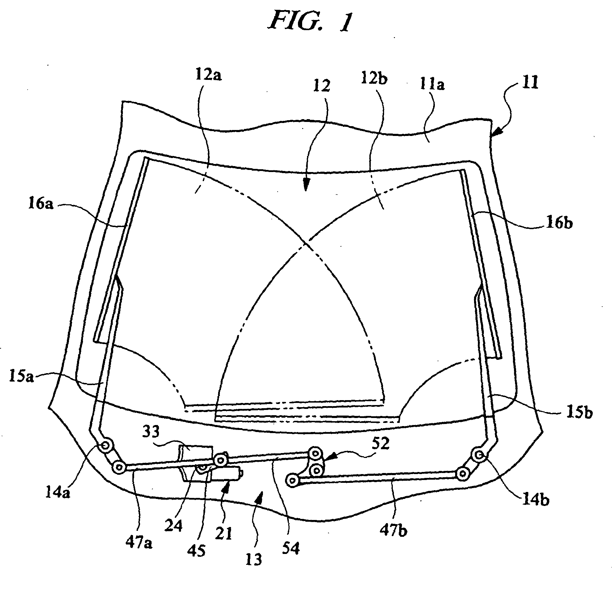

FIG. 1 is an explanatory view schematically showing a vehicle wiper device according to the embodiment of the present invention. A vehicle 11 shown in FIG. 1 is provided with a vehicle wiper device 13 (hereinafter, referred to as a wiper device 13) for wiping rain droplets and the like adhering to a front glass 12 as a window shield glass. The wiper device 13 includes a driver's seat side, that is, DR side wiper shaft 14a and an assistant driver's seat side, that is, AS side wiper shaft 14b, which are arranged on left and right sides. A base portion of a driver's seat side, that is, DR side wiper arm 15a is attached to the DR side wiper shaft 14a, and a base portion of an assistant driver's seat side, that is, AS side wiper arm 15b is attached to the AS side wiper shaft 14b. A driver's seat side, that is, DR side wiper blade 16a is attached to a tip portion of the DR side wiper arm 15a, and an assistant driver's seat side, that is, AS side wiper blade 16b is attached to a tip portion of the AS side wiper arm 15b. These wiper blades 16a and 16b are biased by unshown spring members provided inside the wiper arms 15a and 15b to elastically contact with the front glass 12. The respective wiper arms 15a and 15b swingably move between a lower reverse position which corresponds to a central downside of the front glass 12 and upper reverse positions which correspond to right and left side portions of the front glass 12 so as to be centered about the wiper shafts 14a and 14b, whereby the wiper blades 16a and 16b carry out wiping operations within wiping ranges 12a and 12b on the front glass 12 to wipe a glass surface. Further, in a stop state as shown by a dash-double-dot line in FIG. 1, the respective wiper blades 16a and 16b stop at the lower reverse position in a state of locating upwardly the DR side wiper blade 16a and being adjacent to each other up and down. In this manner, a wiping pattern of the wiper device 13 is of an opposed wiping type in which the DR side wiper arm 15a and the AS side wiper arm 15b carry out opposed wiping operations.

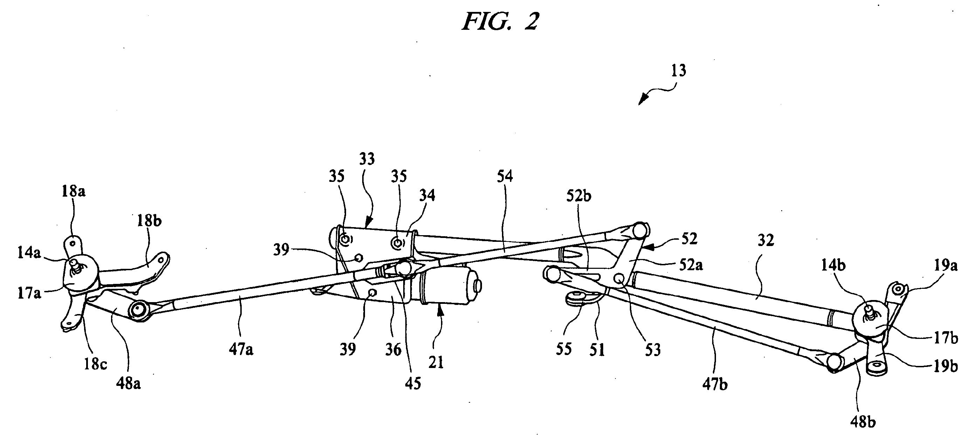

FIG. 2 is a perspective view showing the wiper device shown in FIG. 1 in detail. The wiper device 13 includes a driver's seat side, that is, DR side pivot holder 17a for rotatably supporting the DR side wiper shaft 14a, and an assistant driver's seat side, that is, AS side pivot holder 17b for rotatably supporting the AS side wiper shaft 14b. The DR side pivot holder 17a is provided with three attachment leg portions 18a, 18b, and 18c serving as attachment portions, and the DR side pivot holder 17a is fixed to the vehicle body 11a by unshown bolts through these attachment leg portions 18a, 18b, and 18c, whereby the DR side wiper shaft 14a is positioned to the vehicle body 11a. Likewise, the AS side pivot holder 17b is provided with two attachment leg portions 19a and 19b serving as attachment portions, and the AS side pivot holder 17b is fixed to the vehicle body 11a by unshown bolts through the attachment leg portions 19a and 19b, whereby the AS side wiper shaft 14b is positioned to the vehicle body 11a.

The wiper device 13 is provided with a wiper motor 21 to swingably drive these wiper shafts 14a and 14b.

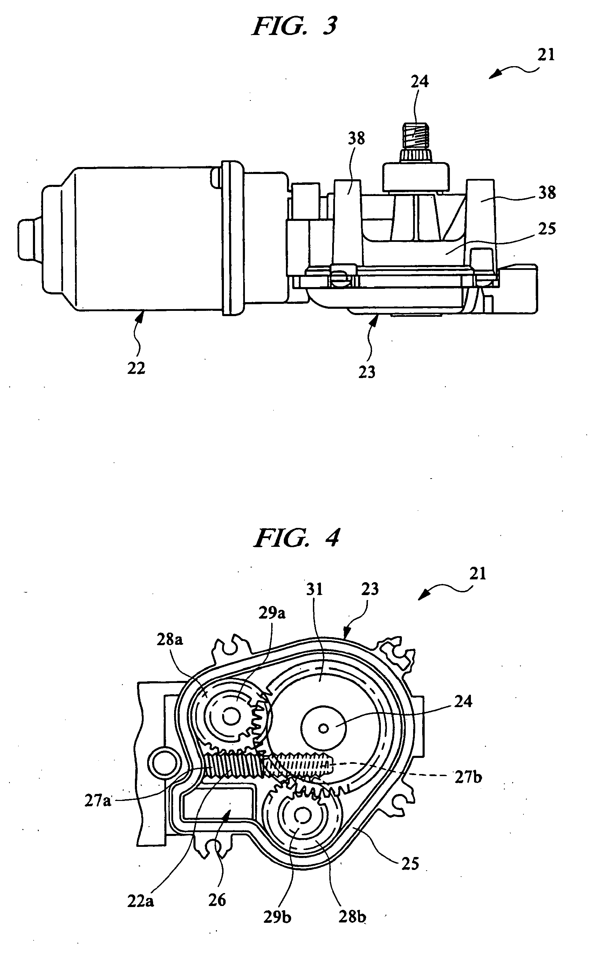

FIG. 3 is a side view showing the wiper motor 21 shown in FIG. 2 in detail, and FIG. 4 is a front view showing an internal structure of a decelerator shown in FIG. 3. As shown in FIG. 3, the wiper motor 21 has a motor body 22 (electric motor). The motor body 22 is a so-called direct current motor with brush, so that when an unshown wiper switch is turned on, the motor body 22 is driven by a direct current supplied from an unshown power source such as a vehicle-mounted battery and the like.

A decelerator 23 is fixed to the motor body 22, and a rotation of the motor body 22 is reduced up to the predetermined number of rotation by the decelerator 23 and is outputted from an output shaft 24. As shown in FIG. 4, the decelerator 23 has an aluminum die-cast gear case 25 and a speed reduction mechanism 26 accommodated inside the gear case 25. The speed reduction mechanism 26 has: a pair of worms 27a and 27b formed in opposite directions to each other on an outer circumferential surface of a rotary shaft 22a of the motor body 22 and projecting into the gear case 25; a pair of worm wheels 28a and 28b meshed with these worms 27a and 27b; a pair of pinions 29a and 29b provided integrally with the worms wheels 28a and 28b; and an output gear 31 meshed with the pinions 29a and 29b, thereby deaccelerating the rotation of the rotary shaft 22a up to two stages and outputting it from the output shaft 24. Further, an unshown cam plate is mounted on a back surface of the output gear 31, and control such as auto stop and the like of the wiper motor 21 is mechanically carried out by the cam plate.

Note that when being illustrated, the direct current motor with brush is used as the motor body 22 and an operation of the motor is mechanically controlled using the unshown cam plate. However, the present invention is not limited thereto, and another type of motor such as a brushless motor may be used as the motor body 22 and further an operation of the another type of motor may be also controlled by a controller provided with a CPU, a memory, and the like.

As shown in FIG. 2, one end portion of a frame 32 formed of a pipe member is fixed to the AS side pivot holder 17b, a motor bracket 33 is fixed to the other end portion of the frame 32, and the wiper motor 21 is fixed to the motor bracket 33. That is, the motor bracket 33, to which the wiper motor 21 is fixed, is linked to the AS side pivot holder 17b through the frame 32, whereby the wiper motor 21 and the AS side pivot holder 17b serve as a subunit.

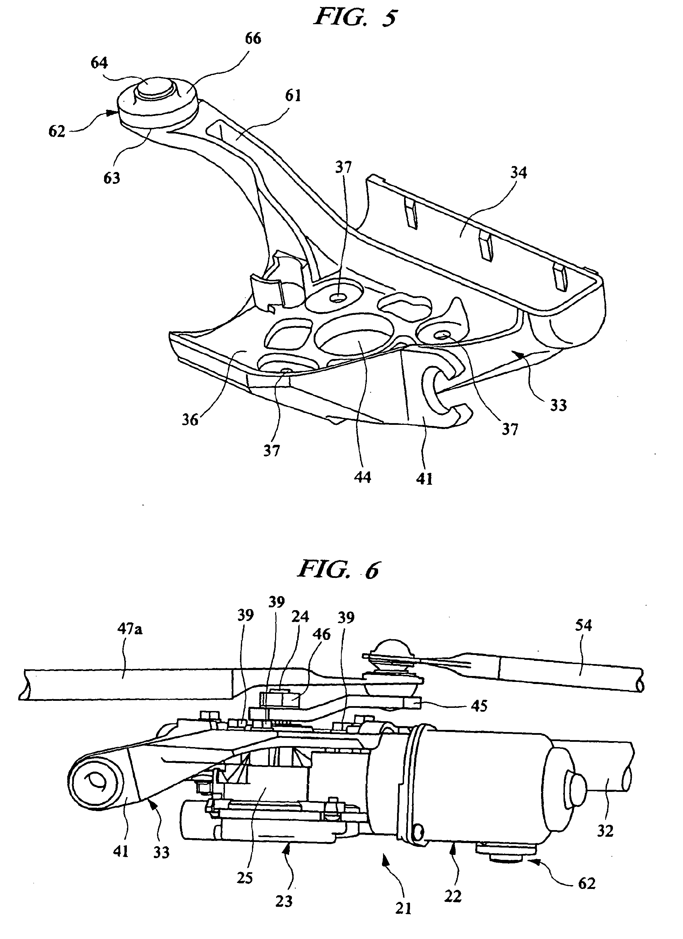

FIG. 5 is a perspective view showing the motor bracket shown in FIG. 2 in detail, and FIG. 6 is a side view showing a state in which the wiper motor is attached to the motor bracket.

The motor bracket 33 is formed of aluminum die cast, has a frame fixing portion 34 formed into a semicylindrical shape as shown in FIG. 5, and fixed to the frame 32 by bolts 35 in the frame fixing portion 34 as shown in FIG. 2. Further, the motor bracket 33 is provided with a motor fixing portion 36 formed integrally with the frame fixing portion 34. Three attachment holes 37 are formed in the motor fixing portion 36, and three attachment legs 38 are provided to the decelerator 23 of the wiper motor 21 as shown in FIG. 3. As shown in FIG. 6, the wiper motor 21 is fixed to the motor bracket 33 by bolts 39 screw-coupled with the attachment legs 38 through the attachment holes 37 of the motor fixing portion 36. Further, the motor bracket 33 includes an attachment leg portion 41 projecting from the motor fixing portion 36 and is fixed to the vehicle body 11a by an unshown bolt using the attachment leg portion 41.

As shown in FIG. 5, a though hole 44 is formed in a motor attachment portion, the output shaft 24 of the wiper motor 21 projects to a back side of the motor bracket 33 through the though hole 44, and an output arm 45 is fixed, by a nut 46, to the tip portion of the output shaft 24 projecting to the back side of the motor bracket 33 of the wiper motor 21. With this arrangement, when the motor body 22 is operated, the output arm 45 is rotated so as to be centered about the output shaft 24.

One end of a DR side drive rod 47a is turnably linked to the tip portion of the output arm 45 by a ball joint (spherical joint), and the other end of the DR side drive rod 47a is turnably linked to a DR side drive lever 48a fixed to the DR side wiper shaft 14a by a ball joint (spherical joint) as shown in FIG. 2. Further, an intermediate bracket 51 is fixed to an intermediate portion of the frame 32, and an intermediate link 52, which has two linking portions 52a and 52b and is formed into a V-shape, is rotatably supported by the intermediate bracket 51 so as to be centered about a support shaft 53. Then, one end of an intermediate rod 54 is turnably linked to the linking portion 52a of the intermediate link 52 by a ball joint (spherical joint), and the other end of the intermediate rod 54 is turnably linked to the tip portion of the output arm 45 by a ball joint (spherical joint). Further, one end of an AS side drive rod 47b is turnably linked to the linking portion 52b of the intermediate link 52 by a ball joint (spherical joint), and the other end of the AS side drive rod 47b is turnably linked to an AS side drive lever 48b fixed to the AS side wiper shaft 14b by a ball joint (spherical joint). With this arrangement, when the wiper motor 21 is operated and the output arm 45 is rotated, the rotation thereof is transmitted through the respective drive rods 47a and 47b, the intermediate rod 54, the intermediate link 52, and the like, whereby the respective drive levers 48a and 48b, that is, the respective wiper shafts 14a and 14b are swingably moved. As described above, the DR side wiper shaft 14a and the AS side wiper shaft 14b are linked to the wiper motor 21 through the respective drive rods 47a and 47b, the intermediate rod 54, the intermediate link 52, the drive levers 48a and 48b, and the like and are swingably driven by the wiper motor 21.

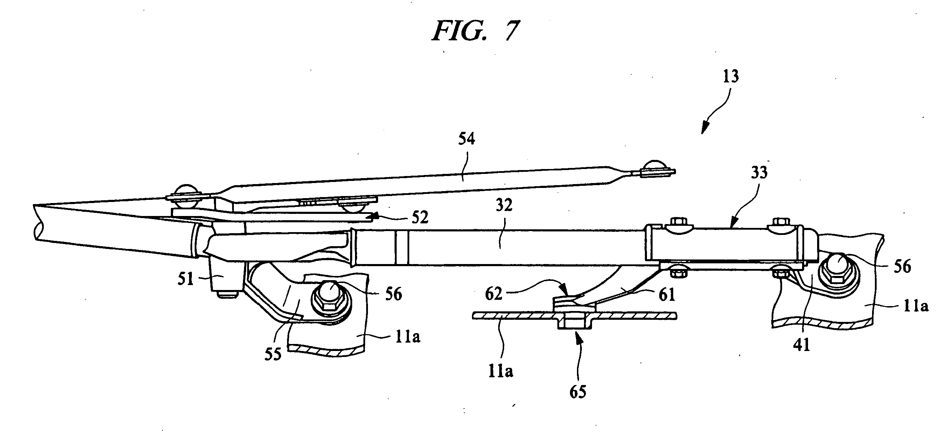

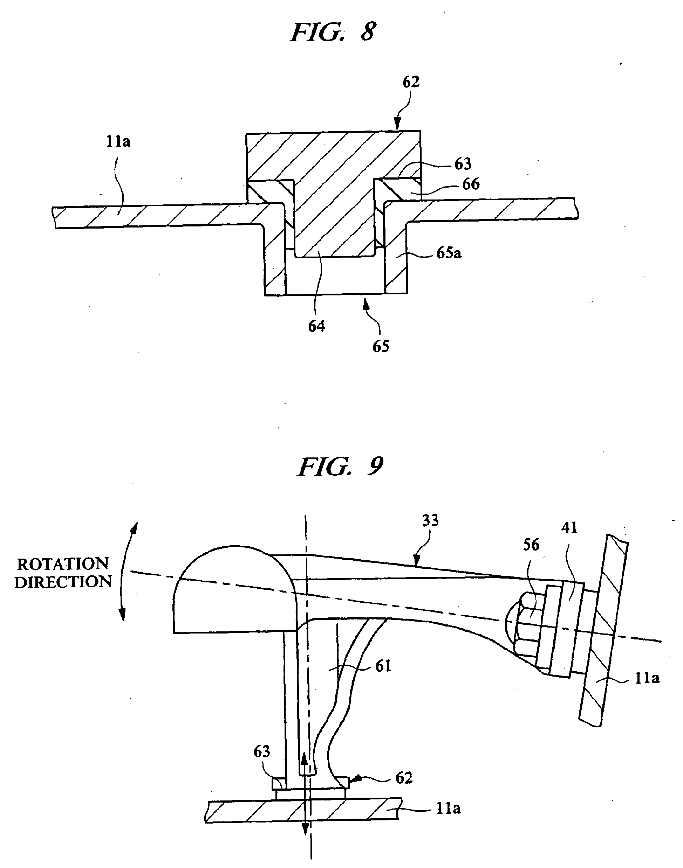

FIG. 7 is a sectional view showing an attachment portion of the motor bracket shown in FIG. 5 to the vehicle body, FIG. 8 is a sectional view showing an engaging portion of a support portion shown in FIG. 7 and the vehicle body in detail, and FIG. 9 is an explanatory view showing a relation between a turn direction of the motor bracket 33 and the support portion.

In the wiper device 13, the attachment leg portion 41 of the motor bracket 33, an attachment leg portion 55 of the intermediate bracket 51, the attachment leg portions 19a and 19b of the AS side pivot holder 17b are fixed to the vehicle body 11a by bolts 56 through a bush formed of an elastic member such as rubber and the like. Accordingly, when the wiper motor 21 is operated, since a load in such a rotation direction as to use the respective attachment leg portions as fulcrums is applied to the motor bracket 33 due to an actuation reaction force thereof, the motor bracket 33 may be turned by the load. For this reason, in the wiper device 13, the motor bracket 33 is provided with a support leg portion 61, and the support portion 62 provided to a tip of the support leg portion 61 is engaged with the vehicle body 11a so as to support the load applied to the motor bracket 33.

Note that, in the embodiment, to prevent the motor bracket 33 from turning so as to be centered about a straight line passing through the attachment leg portion 41 of the motor bracket 33 and the attachment leg portion 55 of the intermediate bracket 51, the support portion 62 is formed so as to be directed in a direction approximately orthogonal to a direction of attaching these attachment leg portions 41 and 55 as well as to be offset from the straight line.

As shown in FIG. 5, the support leg portion 61 is formed integrally with the motor bracket 33 as well as projects downward from the motor fixing portion 36, and, as shown in FIG. 7, the tip portion of the support leg portion 61 faces to a panel member of the vehicle body 11a. As shown in FIG. 8, the support portion 62 provided to the tip of the support leg portion 61 includes a support surface 63 formed downward so as to face to the panel member of the vehicle body 11a, and a support projection 64 projecting downward from a central portion of the support surface 63.

Meanwhile, a support hole 65 having a cylindrical side wall 65a is formed in the panel member of the vehicle body 11a, and the support projection 64 is inserted into the support hole 65, whereby the support portion 62 is positioned to the vehicle body 11a. Further, when the support projection 64 is inserted into the support hole 65, the support surface 63 is abutted against the vehicle body 11a in a portion surrounding an opening of the support hole 65. For this reason, when the motor bracket 33 receives the load directed downward, the load is supported by the support surface 63.

In the wiper device 13, a bush 66 (grommet) formed of rubber as an elastic member is mounted on the support portion 62, and the support surface 63 and the outer circumferential surface of the support projection 64 are covered with the bush 66. Accordingly, when the support projection 64 is inserted into the support hole 65, the bush 66 is interposed between the side wall 65a of the support hole 65 and the outer circumferential surface of the support projection 64 as shown in FIG. 8, whereby vibration and the like caused between the vehicle body 11a and the support projection 64 is absorbed by the bush 66. Further, the bush 66 is also interposed between the support surface 63 and the vehicle body 11a, so that vibration and the like caused between the support surface 63 and the vehicle body 11a is absorbed by the bush 66.

The support portion 62 as described above is provided to the motor bracket 33. Therefore, even if the wiper motor is operated and the load in such a rotation direction as to use the attachment leg portion 41 as a fulcrum is applied to the motor bracket 33 as shown in FIG. 9, the load is supported by the support surface 63, whereby the turn of the motor bracket 33 can be suppressed. At this time, since the support surface 63 itself supports the load applied to the motor bracket 33, the load from the motor bracket 33 acts on the support surface 63 as a compression load and does not act as shear resistance to the support projection 64.

As described above, in the wiper device 13, since the load applied to the motor bracket 33 is supported by the support portion 62, even if the rotation-directional load is applied to the motor bracket 33 by an actuation reaction force and the like of the wiper motor 21, the load can be supported by the support portion 62. Accordingly, vibration and noise of the wiper device 13 can be reduced by suppressing the turn of the motor bracket 33 during a wiper operation. Further, since the load applied to the motor bracket 33 is surface-supported by the support surface 62, the load applied to the motor bracket 33 can be supported as a compression load applied to the support surface 63 in place of a shear load, thereby making it possible to enhance durability of the support portion 62. Further, since the support projection 64 projecting from the support surface 63 is inserted into the support hole 65 of the vehicle body 11a to position the support portion 62, the support portion 62 can be positioned to the vehicle body 11a without using a tightening member such as a bolt and the like. With this arrangement, production costs of the wiper device 13 can be reduced by reducing the number of parts of the wiper device 13 and further simplifying a structure of the wiper device 13.

Further, in the wiper device 13, since the bush 66 formed of an elastic member can be mounted on the support portion 62, vibration and the like generated between the vehicle body 11a and the motor bracket 33 can be absorbed by the bush 66, thereby making it possible to reduce the vibration and noise from the motor bracket 33.

In addition, in the wiper device 13, since the support surface 63 is formed so as to be directed downward, even weight of the wiper motor 21 exerted on the motor bracket 33 is supported by the support portion 62, so that the structure of the wiper device 13 can be simplified. Further, since the support portion 62 is always biased toward a side of the vehicle body 11a by the weight of the wiper motor 21, the support projection 64 can be prevented from being removed from the support hole 65.

It is needless to say that the present invention is not limited to the above embodiment and may be variously modified within a scope of not departing from the gist thereof. For example, the present invention is applied to the opposed wiping type wiper device 13 in the embodiment, but the present invention is not limited thereto and may be applied to wiper devices having other wiping patterns, for example, a tandem type wiper device and the like.

Further, in the embodiment, although the frame 32 links the AS side pivot holder 17b and the motor bracket 33, the present invention is not limited thereto and the frame 32 may be also linked to them. In this case, in order to prevent the motor bracket 33 from turning so as to be centered about a straight line passing through the respective pivot holders 17a and 17b, the support portion 62 is provided at a position offset from the straight line passing through the respective pivot holders 17a and 17b.

## Claims

1. A vehicle wiper device (13) having a wiper shaft (14b) attaching a wiper arm (15b) and a wiper motor (21) operative to swingably drive the wiper shaft and wipe a window shield glass of a vehicle, the vehicle wiper device comprising:
a pivot holder (17b) fixed to a vehicle body in an attachment portion (19a,19b) and rotatably supporting the wiper shaft (14b);
a motor bracket (33) linked to the pivot holder through a frame (32) and fixing the wiper motor, the motor bracket comprising a motor fixing portion (36) formed integrally with a frame fixing portion (34) of the motor bracket, an attachment leg portion (41) projecting from the motor fixing portion via which the motor bracket is fixed to the vehicle body by a bolt and a support leg portion (61) with a support portion (62) at its tip, the support portion being engaged with the vehicle body to support a load applied to the motor bracket; and
**characterised in that** the support portion is directed in a direction approximately orthogonal to a direction of attaching the attachment leg portion, and comprises a support surface (63) abutted against the vehicle body to surface support a load applied to the motor bracket tending to turn the motor bracket using the attachment leg portion as a fulcrum, and thus suppress such turning of the motor bracket, when the wiper motor is operated and a support projection (64) projecting therefrom and into a support hole (65) of the vehicle body.

2. The vehicle wiper device according to claim 1, wherein a bush (66) formed of an elastic member and covering the support surface and the support projection is mounted on the support portion.

3. The vehicle wiper device according to claim 1 or 2 comprising an intermediate bracket (51) fixed to the frame and having an attachment leg portion (55) fixed to the vehicle body by a bolt (56).

4. The vehicle wiper device of claim 3 wherein the support portion is offset from a straight line passing through the attachment leg portion of the motor bracket and the attachment leg portion of the intermediate bracket and formed so as to be directed in a direction approximately orthogonal to a direction of attaching of the attachment leg portions.

## Patentansprüche

1. Fahrzeugwischervorrichtung (13), die eine Wischerwelle (14b) aufweist, die einen Wischerarm (15b) und einen Wischermotor (21) befestigt, der so funktioniert, dass er die Wischerwelle schwenkbar antreibt und eine Fahrzeugfensterscheibe wischt, wobei die Fahrzeugwischervorrichtung Folgendes umfasst:
einen Schwenkhalter (17b), der an einer Fahrzeugkarosserie an einem Befestigungsabschnitt (19a, 19b) befestigt ist und die Wischerwelle (14b) drehbar hält;
eine Motorhalterung (33), die über ein Gestell (32) mit dem Schwenkhalter verbunden ist und den Wischermotor fixiert; wobei die Motorhalterung einen Motorbefestigungsabschnitt (36) umfasst, der eine Einheit mit einem Gestellbefestigungsabschnitt (34) der Motorhalterung bildet, einen Befestigungsschenkelabschnitt (41), der vom Motorbefestigungsabschnitt absteht, über den die Motorhalterung mit einem Bolzen an der Fahrzeugkarosserie befestigt ist, und einen Stützschenkelabschnitt (61) mit einem Stützabschnitt (62) an der Spitze, wobei der Stützabschnitt mit der Fahrzeugkarosserie in Kontakt steht, um eine Last aufzunehmen, mit der die Motorhalterung beansprucht wird; und
**dadurch gekennzeichnet, dass** der Stützabschnitt in einer Richtung ungefähr orthogonal zu einer Richtung der Befestigung des Befestigungsschenkelabschnitts ausgerichtet ist und eine Stützfläche (63) umfasst, die an der Fahrzeugkarosserie anliegt, um eine Last flächenmäßig aufzunehmen, mit der die Motorhalterung beansprucht wird und die dazu neigt, die Motorhalterung unter Verwendung des Befestigungsschenkelabschnitts als Drehpunkt zu drehen, und damit das Drehen der Motorhalterung zu unterdrücken, wenn der Wischermotor betrieben wird, und einen Stützvorsprung (64), der davon absteht und in ein Stützloch (65) der Fahrzeugkarosserie hineinragt.

2. Fahrzeugwischervorrichtung nach Anspruch 1, wobei eine Hülse (66), die aus einem elastischen Element gebildet ist und die Stützfläche und den Stützvorsprung bedeckt, an dem Stützabschnitt angebracht ist.

3. Fahrzeugwischervorrichtung nach Anspruch 1 oder 2, die eine Zwischenhalterung (51) umfasst, die am Gestell befestigt ist und einen Befestigungsschenkelabschnitt (55) aufweist, der mit einem Bolzen (56) an der Fahrzeugkarosserie befestigt ist.

4. Fahrzeugwischervorrichtung nach Anspruch 3, wobei der Stützabschnitt zu einer geraden Linie, die durch den Befestigungsschenkelabschnitt der Motorhalterung und den Befestigungsschenkelabschnitt der Zwischenhalterung verläuft, versetzt ist und so geformt ist, dass er in einer Richtung ungefähr orthogonal zu einer Richtung der Befestigung der Befestigungsschenkelabschnitte ausgerichtet ist.

## Revendications

1. Dispositif d'essuie-glace (13) pour véhicule ayant un arbre d'essuie-glace (14b) fixant un bras d'essuie-glace (15b) et un moteur d'essuie-glace (21) qui est à même d'entraîner en pivotement l'arbre d'essuie-glace et d'essuyer un pare-brise de véhicule, le dispositif d'essuie-glace du véhicule comprenant :
un porte-pivot (17b) fixé à une carrosserie de véhicule dans une portion de fixation (19a, 19b) et supportant à rotation l'arbre d'essuie-glace (14b) ;
un support moteur (33) relié au porte-pivot par l'intermédiaire d'un châssis (32) et fixant le moteur d'essuie-glace, le support moteur comprenant une portion de fixation de moteur (36) formée d'une seule pièce avec une portion de fixation de châssis (34) du support moteur, une portion de patte de fixation (41) faisant saillie de la portion de fixation de moteur et par laquelle le support moteur est fixé à la carrosserie du véhicule par un boulon et une portion de patte de support (61) avec une portion de support (62) à sa pointe, la portion de support étant engagée sur la carrosserie du véhicule pour supporter une charge appliquée au support moteur ; et
**caractérisé en ce que** la portion de support est dirigée dans une direction à peu près orthogonale à une direction de fixation de la portion de patte de fixation et comprend une surface de support (63) en butée contre la carrosserie du véhicule pour supporter en surface une charge appliquée au support moteur ayant tendance à faire tourner le support moteur en utilisant la portion de patte de fixation comme pivot, et pour supprimer par suite cette rotation du support moteur lorsque le moteur d'essuie-glace est activé, ainsi qu'une saillie de support (64) ressortant de celui-ci et dans un orifice de support (65) de la carrosserie du véhicule.

2. Dispositif d'essuie-glace pour véhicule selon la revendication 1, dans lequel une douille (66) formée d'un élément élastique et recouvrant la surface de support et la saille de support est montée sur la portion de support.

3. Dispositif d'essuie-glace pour véhicule selon la revendication 1 ou 2, comprenant un support intermédiaire (51) fixé au châssis et ayant une portion de patte de fixation (55) fixée à la carrosserie du véhicule par un boulon (56).

4. Dispositif d'essuie-glace pour véhicule selon la revendication 3, dans lequel la portion de support est décalée par rapport à une ligne droite traversant la portion de patte de fixation du support moteur et la portion de patte de fixation du support intermédiaire et formée pour être dirigée dans une direction à peu près orthogonale à une direction de fixation des portions de pattes de fixation.
